# EUROPEAN PATENT APPLICATION

(11) **EP 4 600 910 A1**
(43) Date of publication of application: **13.08.2025**
(21) Application number: 25156093.4
(22) Date of filing: 05.02.2025
(51) Int. Cl.: G06T 15/02

(54) **GENERATION OF SEMANTICALLY STYLIZED AVATARS**

(30) Priority: 06.02.2024 US 202418434696
(71) Applicant: Microsoft Technology Licensing, LLC, Redmond, WA 98052-6399 (US)
(72) Inventor: PETIKAM, Lohit Dev, Redmond, 98052-6399 (US); REZAEIFAR, Shideh, Redmond, 98052-6399 (US); HEWITT, Charles Thomas, Redmond, 98052-6399 (US)
(74) Representative: Page White Farrer

(57) **Abstract**

A computing system (10) for generating semantically stylized avatars includes processing circuitry (18) that implements a semantic stylization avatar rig (26). In an inference phase, the processing circuitry (18) receives an instruction (32) to generate a semantically stylized avatar (34), the instruction (32) including an input image (36) of a user for which the semantically stylized avatar (34) is to be generated. A user face mesh (40) is generated based on identity parameters (42) of the input image (36), the user face mesh (40) including curves that determine a face size and a face shape, and relative proportions and positions of facial features. A neutral expression user face mesh (48) is generated by removing expression and pose parameters from the user face mesh (40). The input image (36), the identity parameters (42), and the neutral expression user face mesh (48) are input to a semantic stylization avatar generation module (50) to generate a semantically stylized avatar (34) with semantically stylized features (60), and the semantically stylized avatar (34) is output.

## Description

### BACKGROUND

Avatars are used in a variety of computer applications. For example, avatars provide digital, graphical representations of users in teleconferencing and hybrid presence applications, thereby enabling a user to have a virtual presence without using their camera. Human avatar systems often use a generic rig for the basis of an avatar, and elements of a user's likeness are then added to generate a unique avatar for the user. However, as discussed below, opportunities remain for improvements in the representation of individual users and diverse demographics, particularly for stylized avatars with limited visual language to depict diverse human attributes.

### SUMMARY

To address the issues discussed herein, computing systems and methods for generating semantically stylized avatars are provided. In one aspect, the computing system includes processing circuitry that executes instructions using portions of associated memory to implement a semantic stylization avatar rig. In an inference phase, the processing circuitry is configured to receive an instruction to generate a semantically stylized avatar. The instruction includes an input image of a user for which the semantically stylized avatar is to be generated. A user face mesh is created based on identity parameters of the input image of the user. The user face mesh may include curves that determine a face size and a face shape, and relative proportions and positions of facial features with respect to the determined face size and face shape. A neutral expression user face mesh is generated by removing expression parameters and pose parameters from the user face mesh. The input image, the identity parameters, and the neutral expression user face mesh are input to a semantic stylization avatar rig to generate a semantically stylized avatar including semantically stylized features, and the semantically stylized avatar is output.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 shows a schematic view of a computing system for generating semantically stylized avatars, according to one embodiment.
FIG. 2 shows example identity parameters, in accordance with the computing system of FIG. 1.
FIG. 3A shows an example user face mesh, in accordance with the computing system of FIG. 1.
FIG. 3B shows an example neutral expression user avatar, in accordance with the computing system of FIG. 1.
FIGS. 4A to 4D show user face meshes and respective neutral expression user avatars without semantic stylization, in accordance with the computing system of FIG. 1.
FIGS. 5A to 5G show features of user face meshes with identity variations and respective features of user avatars with semantic stylization, in accordance with the computing system of FIG. 1.
FIGS. 6A to 6C show a first example of wrinkle detection for semantically stylized features, in accordance with the computing system of FIG. 1.
FIGS. 7A to 7C show a second example of wrinkle detection for semantically stylized features, in accordance with the computing system of FIG. 1.
FIGS. 8A and 8B show a first example of an input image and a first example of a semantically stylized avatar based on the first input image, in accordance with the computing system of FIG. 1.
FIGS. 9A and 9B show a second example of an input image and a second example of a semantically stylized avatar based on the second input image, in accordance with the computing system of FIG. 1.
FIGS. 10A and 10B show a third example of an input image and a third example of a semantically stylized avatar based on the third input image, in accordance with the computing system of FIG. 1.
FIGS. 11A to 11D show semantic segmentation and stylization of an input image, in accordance with the computing system of FIG. 1.
FIGS. 12A to 12C show examples of a semantically stylized avatar during animation, in accordance with the computing system of FIG. 1.
FIG. 13 shows a flowchart of a method for generating semantically stylized avatars according to an example implementation of the present disclosure.
FIG. 14 shows a schematic view of an example computing environment according to which the embodiments of the present disclosure may be implemented.

### DETAILED DESCRIPTION

Human avatar systems conventionally use a single, generic base rig that is designed for a majority demographic. While the rig can morph into varied human face and body shapes, current systems rely on large libraries of fixed assets and/or complicated user interfaces to generate avatars with characteristics that represent individual users. Adding anatomical shapes to the base rig to capture the facial features of diverse and under-represented users can be prohibitively expensive. As such, a need exists for a system that is designed to generate avatars that stylistically depict diversity in human facial features.

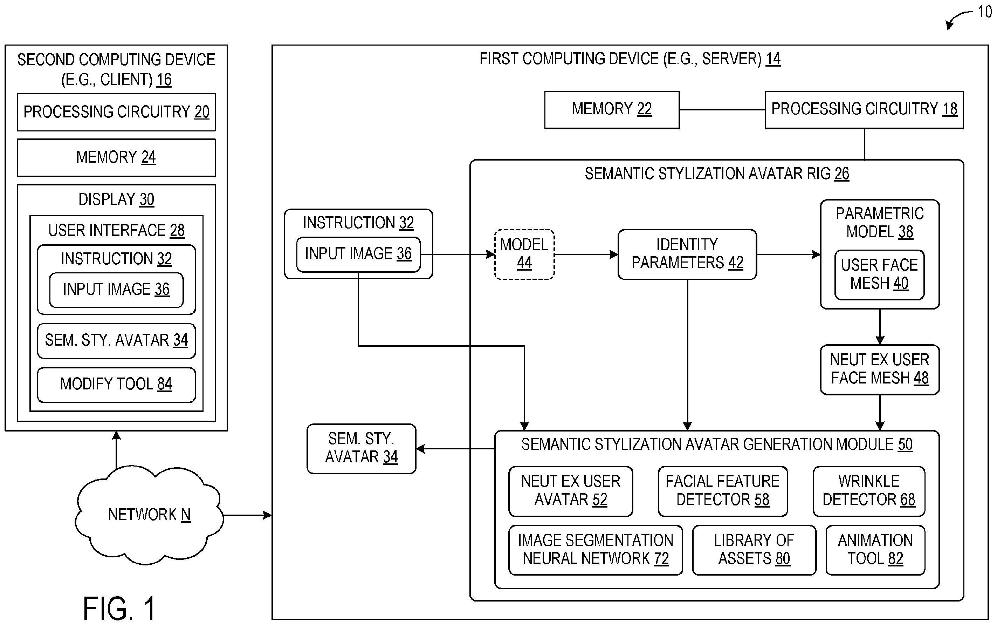

In view of the issues discussed above, a computing system for generating semantically stylized avatars is provided. The computing system described herein addresses the issues discussed above by incorporating semantic detection and stylization techniques to target diverse features in users. Referring initially to FIG. 1, the computing system 10 includes at least one computing device. The computing system 10 is illustrated as having a first computing device 14 including processing circuitry 18 and memory 22, and a second computing device 16 including processing circuitry 20 and memory 24, the second computing device 16 being in communication with the first computing device 14 via a network N. The illustrated implementation is exemplary in nature, and other configurations are possible. In the description below, the first computing device will be described as a server 14 and the second computing device will be described as a client computing device 16, and respective functions carried out at each device will be described. It will be appreciated that in other configurations, the computing system 10 may include a single computing device that carries out the salient functions of both the server 14 and client computing device 16, and that the first computing device could be a computing device other than server. In other alternative configurations, functions described as being carried out at the server 14 may alternatively be carried out at the client computing device 16 and vice versa.

Continuing with FIG. 1, the processing circuitry 18 is configured to execute instructions using portions of associated memory 22 to implement a semantic stylization avatar rig 26. The client computing device 16 includes a user interface 28 that is displayed on a display 30 and configured to receive an instruction 32 to generate a semantically stylized avatar 34. As described in detail below, the instruction 32 is input by a user via the user interface 28 and includes an input image 36 of the user for which the semantically stylized avatar 34 is to be generated. In the embodiments described herein, the input image 36 is a frontal face image, such as a "selfie;" however, it will be appreciated that the input image 36 may be taken at an angle and/or may include some or all of the body of the user in addition to the face.

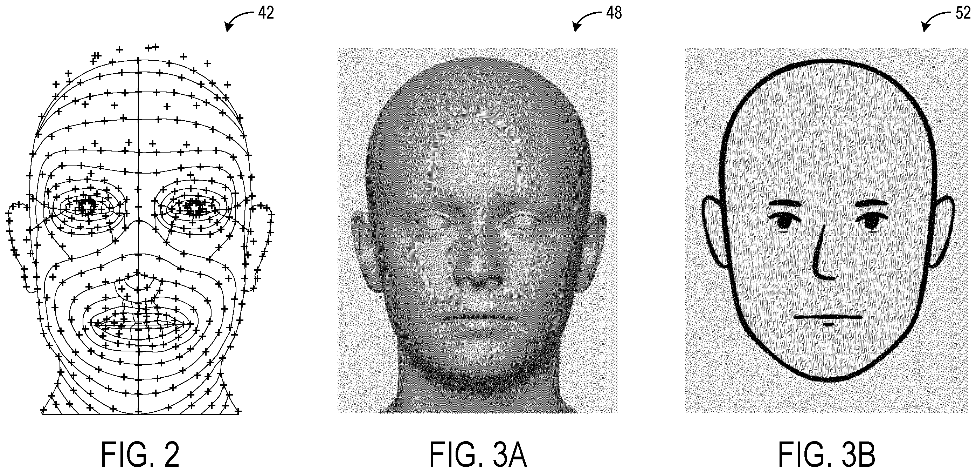

Upon receiving the instruction 32, the semantic stylization avatar rig 26 implements a parametric face model 38 to generate a user face mesh 40 based on identity parameters 42 of the input image 36. In some implementations, the identity parameters 42 may be output from a model 44 that is configurated to predict landmarks in the input image 36, for example. However, it will be appreciated that the identity parameters 42 may be generated by any suitable process or source. Example identity parameters 42 are illustrated in FIG. 2, with the "+" symbols representing probabilistic dense landmarks. The identity parameters 42 determine a face size and face shape of the input image 36, as well as relative proportions and positions of facial features with respect to the determined face size and face shape. The user face mesh 40 generated by the parametric face model 38 may be three-dimensional.

Next, expression parameters and pose parameters of the three-dimensional user face mesh 40 are removed to generate a neutral expression user face mesh 48. An example of a neutral expression user face mesh 48 is shown in FIG. 3A. The neutral expression user face mesh 48 is input to a semantic stylization avatar generation module 50 to generate a neutral expression user avatar 52, an example of which is shown in FIG. 3B. In the embodiments described herein, avatars are generated as two-dimensional avatars; however, it will be appreciated that avatars may also be generated as three-dimensional avatars.

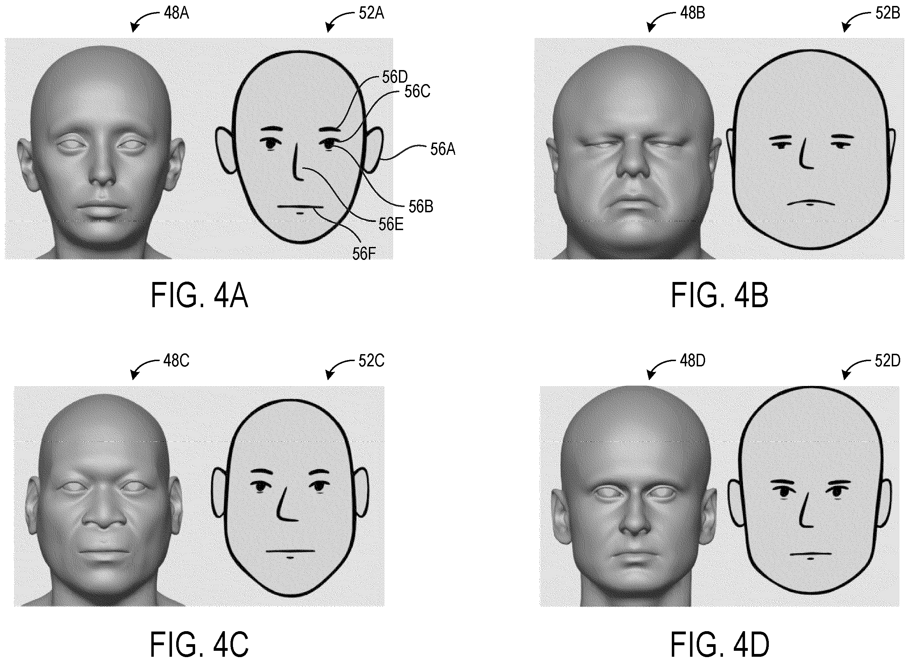

Additional examples of three-dimensional neutral expression user face meshes 48A, 48B, 48C, 48D and their respective neutral expression user avatars 52A, 52B, 52C, 52D are illustrated in FIGS. 4A to 4D. As shown in FIG. 4A, facial features 56 in the neutral expression user avatar 52A include ears 56A, eyes 56B, eyelids 56C, eyebrows 56D, nose 56E, and mouth 56F. Differences in the sizes, shapes, proportions, and locations of these facial features impart identity variation among the neutral expression user avatars 52, which is then further enhanced with semantically stylized features, as described in detail below.

Returning to FIG. 1, in addition to the neutral expression user face mesh 48, the input image 36 and the identity parameters 42 are also input to the semantic stylization avatar generation module 50. A facial feature detector 58 detects facial features 56 from the identity parameters 42 that can be semantically stylized in the neutral expression user avatar 52, such as hooded eyes 60A, upturned nose 60B, wide nose 60C, thick lips 60D and/or jowls 60G. The facial feature detector 58 may implement part-based principal component analysis (PCA) decomposition of the neutral expression user face mesh 48 to detect these semantic facial features. Initially, PCA decomposition of eyes, nose, and chin regions is performed across a training set of hundreds of diverse scans, and thresholds of PCA components of the semantic features are manually determined. This process is performed offline, and the PCA transformations for each part and relevant thresholds for different components are stored. When generating a semantically stylized avatar 34 for a user, the user face mesh 40 is transformed into the PCA bases, and different curves are rendered if the relative PCA components are at or above a manually defined threshold for each feature 60A, 60B, 60C, 60D, 60G.

Additionally or alternatively, direct measurements of facial features can be used to determine if a feature meets a threshold for semantic stylization. For example, the thick lips feature 60D is determined by measuring the distance between the top of the lips and the bottom of the lips on the user face mesh 40. If the measurement is greater than 2.7 cm, the semantically stylized avatar 34 would include the stylized thick lips feature 60D. It will be appreciated that the measurement of 2.7 cm is merely exemplary in nature, and that a different measurement greater than or less than 2.7 cm may alternatively be used to determine if the semantically stylized avatar 34 should include the stylized thick lips feature 60D.

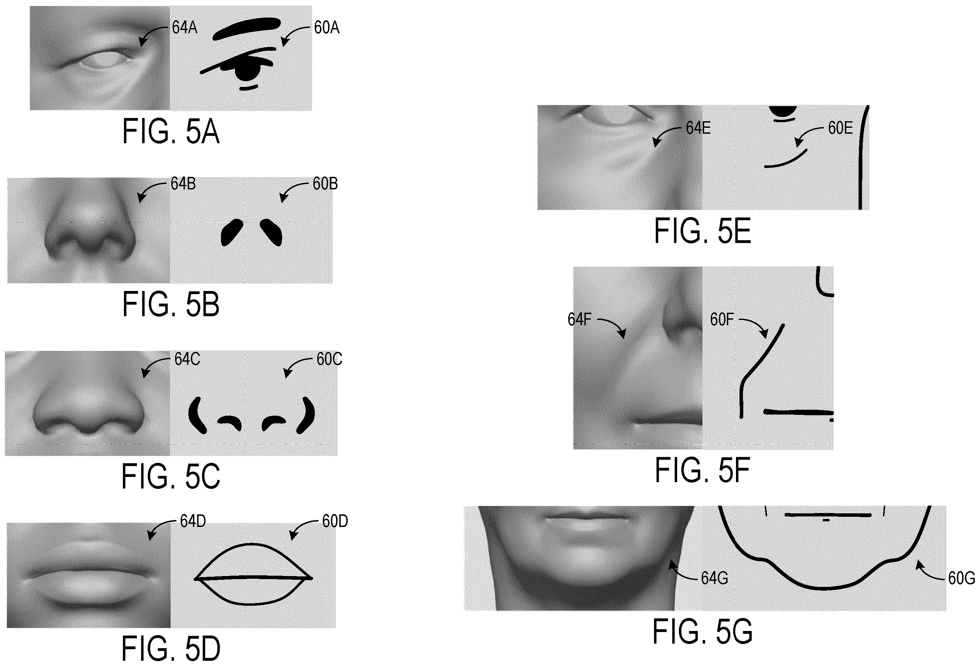

FIGS. 5A to 5G show portions 64A to 64G of neutral expression user face meshes 48 and respective semantically stylized features 60A to 60G. As illustrated, the semantically stylized features 60 depicted in the semantically stylized avatar 34 include one or more of hooded eyes 60A, upturned nose 60B, wide nose 60C, thick lips 60D, under-eye lines 60E, nasolabial folds 60F, and jowls 60G. Additional semantically stylized features of hair 60H and skin tone 60I will be discussed in detail below.

To determine if the input image 36 of the user has under-eye lines 60E or nasolabial folds 60F, and/or jowls 60G, the semantic stylization avatar generation module 50 includes a wrinkle detector 68, as shown in FIG. 1. Curvature information 70 of the three-dimensional neutral expression user face mesh 48 can be utilized for wrinkle detection, as it enables identification of areas where the mesh surface displays more intricate and detailed patterns, which are often associated with wrinkles. For each region of interest, the curvature information 70 is computed from the three-dimensional mesh vertices, followed by the application of a hard threshold to the curvature values, effectively pinpointing regions with pronounced curvature. Additionally, smoothing techniques can be incorporated to enhance the contrast between wrinkle and non-wrinkle regions. By comparing the vertex positions before and after applying the smoothing operation, the disparities caused by wrinkles can be identified. For each detected region, it is determined whether the difference between vertex positions before and after smoothing is higher than a certain threshold. This additional step further enhances the robustness of the wrinkle detection process With these region-wise detection results, the semantically stylized avatar 34 can include wrinkle features to the correct regions to preserve likeness of the semantically stylized avatar 34 to the input image 36 while also retaining stylistic consistency.

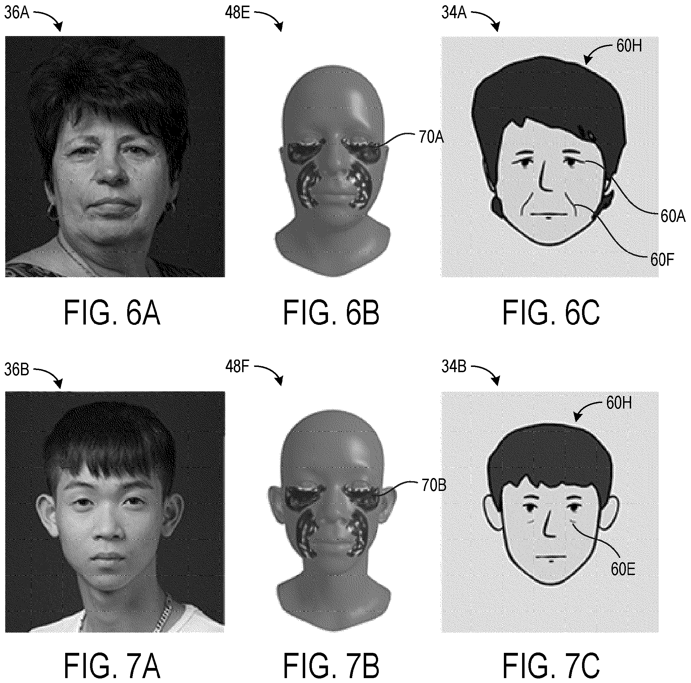

A first example of wrinkle detection and extraction for semantically stylized features 60 is shown in FIGS. 6A to 6C. The input image 36A for the semantically stylized avatar 34A is pictured in FIG. 6A. FIG. 6B illustrates the user face mesh 48E with identity variation and curvature information 70A. The semantically stylized avatar 34A with hooded eyes 60A and nasolabial folds 60F is shown in FIG. 6C.

A second example of wrinkle detection and extraction for semantically stylized features 60 is shown in FIGS. 7A to 7C. The input image 36B for the semantically stylized avatar 34B is pictured in FIG. 7A. FIG. 7B illustrates the user face mesh 48F with identity variation and curvature information 70B. The semantically stylized avatar 34B with under-eye lines 60E is shown in FIG. 7C.

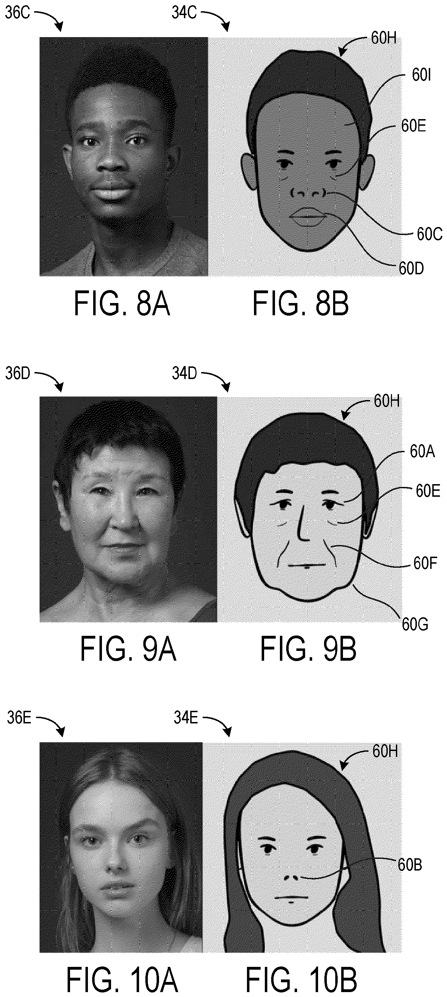

FIGS. 8A and 8B show a first example of an input image 36C and a first example of a semantically stylized avatar 34C based on the first input image 36C. As illustrated, it was determined that the semantically stylized avatar 34C should include semantically stylized features of under-eye lines 60A, wide nose 60C, and thick lips 60D.

FIGS. 9A and 9B show a second example of an input image 36D and a second example of a semantically stylized avatar 34D based on the second input image 36D. As illustrated, it was determined that the semantically stylized avatar 34D should include semantically stylized features of hooded eyes 60A, under-eye lines 60E, nasolabial folds 60F, and jowls 60G.

FIGS. 10A and 10B show a third example of an input image 36E and a third example of a semantically stylized avatar 34E based on the third input image 36E. As illustrated, it was determined that the semantically stylized avatar 34E should include semantically stylized feature of an upturned nose 60B.

Each of the semantically stylized avatars 34A, 34B, 34C, 34D, and 34E illustrated in FIGS. 6C, 7C, 8, 9, and 10, respectively, include stylized hair 60H, and the semantically stylized avatar 34C additionally includes dark skin 60I. To determine the semantically stylized features of hair or headwear 60H, skin tone 60I, and accessories 60J such as glasses or jewelry, the semantic stylization avatar generation module 50 implements an image segmentation neural network 72, as shown in FIG. 1. A shape of the hair 60H is extracted directly from the input image 36 via segmentation. The image segmentation neural network 72, which may be implemented as a deep neural network (DNN), semantically segments the face and outputs classes for skin, head hair, facial hair, eyebrows, headwear, and glasses.

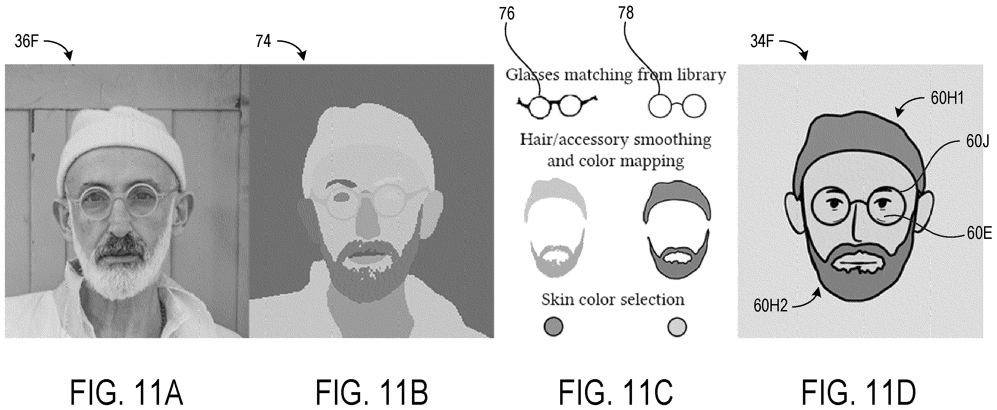

FIG. 11A shows an example input image 36F, and FIG. 11B illustrates an example segmentation image 74 after semantic segmentation of the input image 36F. Using the predicted semantic regions, classical contour extraction is implemented to find the boundaries of the applicable regions. The contours are then post-processed to smooth the boundaries to conform with the avatar style and normalized by head scale. The mean color of each region of the input image 36 is also extracted and mapped to a stylized palette to approximate hair and skin tone. FIG. 11C shows the smoothing and color mapping of the hat and facial hair regions, as well as hair and skin tone selections. One or more accessories may also be extracted from the input image 36. In the example shown in FIG. 11C, a glasses segmentation output 76 is used to select the closest style of glasses 78 from a library of assets 80 included in the semantic stylization avatar generation module 50. The resulting shapes of the smoothed and color-mapped regions are rigidly attached to the semantically stylized avatar 34, as illustrated in FIG. 11D in which the semantically stylized avatar 34F with under-eye lines 60E also includes a hat 60H1, facial hair 60H2, glasses 60J.

In some implementations, the semantic stylization avatar generation module 50 may include an animation tool 82, as shown in FIG. 1. As the semantic stylization avatar rig 26 directly samples vertices from the face geometry of the user face mesh 40, head tracking is supported by animating the three-dimensional neutral expression user face mesh 48 with the obtained expression parameters. For two-dimensional head motion, the solved translation and pose parameters are applied to the semantically stylized avatar 34. However, head rotation is scaled down to avoid side profiles, while preserving subtle head turns.

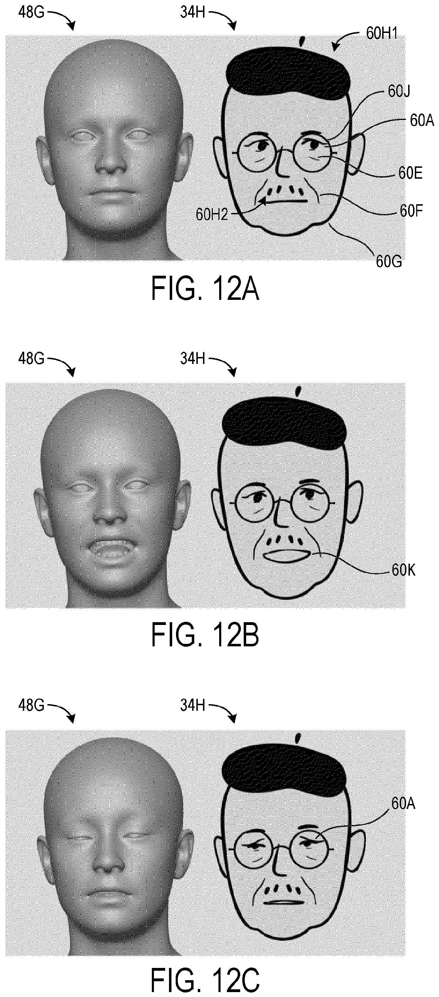

FIGS. 12A to 12C show examples of a three-dimensional neutral expression user face mesh 48G and a semantically stylized avatar 34H during animation. As shown in FIGS. 12A to 12C, the animation tool 82 supports diverse stylization options for the semantically stylized avatar 34H, including custom assets like hair shape, glasses, and hats determined by image segmentation. In FIG. 12A, the semantically stylized avatar 34H is shown with the stylized features of hooded eyes 60A, under-eye lines 60E, nasolabial folds 60F, jowls 60G, a hat 60H1, facial hair 60H2, and glasses 60J. FIG. 12B illustrates the semantically stylized avatar 34H with an open mouth 60K, which is how it may appear with animation while talking or yawning, for example. It will be appreciated that the animation tool 82 additionally defines custom open-mouth curves that support the semantically stylized feature of thick lips 60D. An eye-closing expression for hooded eyes 60A is illustrated in FIG. 12C.

Returning to FIG. 1, the processing circuiting 18 is configured to output the semantically stylized avatar 34 from semantic stylization avatar generation module 50. The semantically stylized avatar 34 may be output to the client computing device 16 and displayed in the user interface 28. In some implementations, the user may further adjust the semantically stylized avatar 34 via a modify tool 84 included in the user interface 28 of the client computing device 16. The modify tool 84 enables the user to select accessories from the library of assets 80, which includes artist-designed assets, as well as adjust semantically stylized facial features 60 on the semantically stylized avatar 34.

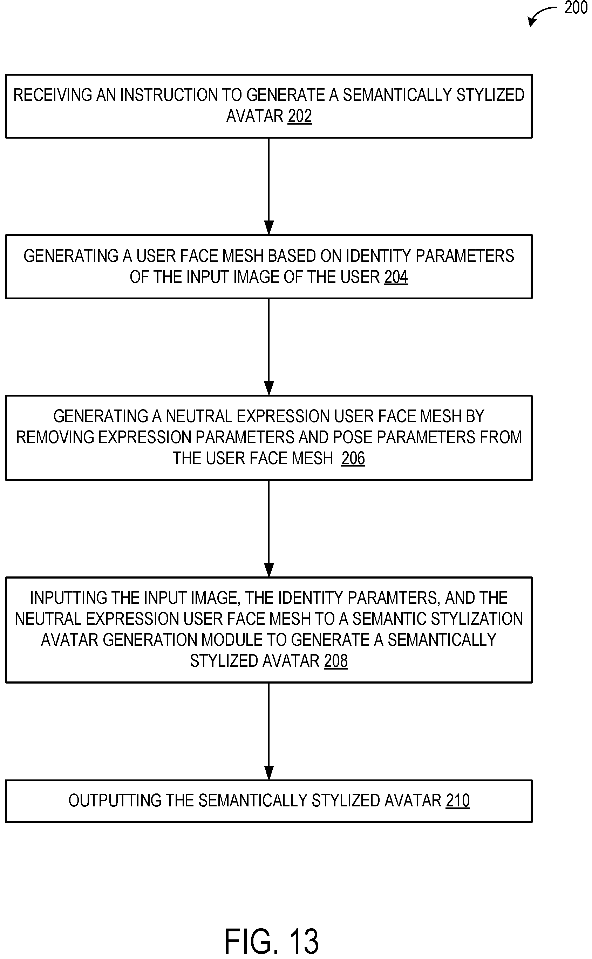

FIG. 13 shows a flowchart for a method 200 for generating semantically stylized avatars. Method 200 may be implemented by the hardware and software of computing system 10 described above, or by other suitable hardware and software. At step 202, the method 200 may include receiving an instruction to generate a semantically stylized avatar. As discussed above, the instruction may be input by a user and may include an input image of a user for which the semantically stylized avatar is to be generated. The input image may be a frontal face image, such as a "selfie."

Proceeding from step 202 to step 204, the method 200 may further include generating a user face mesh based on identity parameters of the input image of the user. The identity parameters may be dense landmarks generated via a convolutional neural network that is trained to predict probabilistic dense landmarks. The user face mesh may include curves that determine a face size and a face shape, and relative proportions and positions of facial features with respect to the determined face size and face shape.

Advancing from step 204 to step 206, the method 200 may further include generating a neutral expression user face mesh by removing expression parameters and pose parameters from the user face mesh.

Continuing from step 206 to step 208, the method 200 may further include inputting the input image, the identity parameters, and the neutral expression user face mesh to a semantic stylization avatar generation module to generate a semantically stylized avatar including semantically stylized features. The semantically stylized avatar may include hooded eyes, upturned nose, wide nose, thick lips, and jowls detected by a facial feature detector. The semantically stylized avatar may further include under-eye lines and nasolabial folds detected by a wrinkle detector. The semantically stylized avatar may further include a hair shape and color, headwear, accessories, and skin tone.

Advancing from step 208 to step 210, the method 200 may further include outputting the semantically stylized avatar. The semantically stylized avatar may be displayed in a user interface of a client computing device, and the user may adjust the features of the semantically stylized avatar via a modify tool.

The semantic stylization avatar rig described herein generates user avatars with visual styles that accommodate diverse human features. This approach addresses challenges in the field of avatar development for under-represented populations, such as people of color and elderly people. The claimed semantic stylization avatar rig enables users to have avatars that more accurately represent their appearances without sorting through large libraries of fixed assets and/or complicated user interfaces. Additionally, including semantic stylization tools in the base design of the claimed semantic stylization avatar rig avoids costly and time-consuming retrofitting of an avatar rig to provide fair representation of diverse demographics.

In some embodiments, the methods and processes described herein may be tied to a computing system of one or more computing devices. In particular, such methods and processes may be implemented as a computer-application program or service, an application-programming interface (API), a library, and/or other computer-program products.

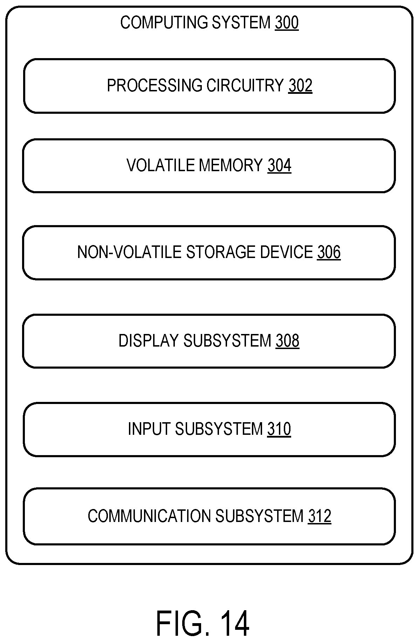

FIG. 14 schematically shows a non-limiting embodiment of a computing system 300 that can enact one or more of the methods and processes described above. Computing system 300 is shown in simplified form. Computing system 300 may embody the computing devices 14 and/or 16 described above and illustrated in FIG. 1. Computing system 300 may be included in one or more personal computers, server computers, tablet computers, home-entertainment computers, network computing devices, video game devices, mobile computing devices, mobile communication devices (e.g., smart phone), and/or other computing devices, and wearable computing devices such as smart wristwatches and head mounted augmented reality devices.

Computing system 300 includes processing circuitry 302, volatile memory 304, and a non-volatile storage device 306. Computing system 300 may optionally include a display subsystem 308, input subsystem 310, communication subsystem 312, and/or other components not shown in FIG. 1.

Processing circuitry 302 typically includes one or more logic processors, which are physical devices configured to execute instructions. For example, the logic processors may be configured to execute instructions that are part of one or more applications, programs, routines, libraries, objects, components, data structures, or other logical constructs. Such instructions may be implemented to perform a task, implement a data type, transform the state of one or more components, achieve a technical effect, or otherwise arrive at a desired result.

The logic processor may include one or more physical processors configured to execute software instructions. Additionally or alternatively, the logic processor may include one or more hardware logic circuits or firmware devices configured to execute hardware-implemented logic or firmware instructions. Processors of the processing circuitry 302 may be single-core or multi-core, and the instructions executed thereon may be configured for sequential, parallel, and/or distributed processing. Individual components of the processing circuitry optionally may be distributed among two or more separate devices, which may be remotely located and/or configured for coordinated processing. For example, aspects of the computing system disclosed herein may be virtualized and executed by remotely accessible, networked computing devices configured in a cloud-computing configuration. In such a case, these virtualized aspects are run on different physical logic processors of various different machines, it will be understood. These different physical logic processors of the different machines will be understood to be collectively encompassed by processing circuitry 302.

Non-volatile storage device 306 includes one or more physical devices configured to hold instructions executable by the processing circuitry to implement the methods and processes described herein. When such methods and processes are implemented, the state of non-volatile storage device 306 may be transformed-e.g., to hold different data.

Non-volatile storage device 306 may include physical devices that are removable and/or built-in. Non-volatile storage device 306 may include optical memory, semiconductor memory, and/or magnetic memory, or other mass storage device technology. Non-volatile storage device 306 may include nonvolatile, dynamic, static, read/write, read-only, sequential-access, location-addressable, file-addressable, and/or content-addressable devices. It will be appreciated that non-volatile storage device 306 is configured to hold instructions even when power is cut to the non-volatile storage device 306.

Volatile memory 304 may include physical devices that include random access memory. Volatile memory 304 is typically utilized by processing circuitry 302 to temporarily store information during processing of software instructions. It will be appreciated that volatile memory 304 typically does not continue to store instructions when power is cut to the volatile memory 304.

Aspects of processing circuitry 302, volatile memory 304, and non-volatile storage device 306 may be integrated together into one or more hardware-logic components. Such hardware-logic components may include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

The terms "module," "program," and "engine" may be used to describe an aspect of computing system 300 typically implemented in software by a processor to perform a particular function using portions of volatile memory, which function involves transformative processing that specially configures the processor to perform the function. Thus, a module, program, or engine may be instantiated via processing circuitry 302 executing instructions held by non-volatile storage device 306, using portions of volatile memory 304. It will be understood that different modules, programs, and/or engines may be instantiated from the same application, service, code block, object, library, routine, API, function, etc. Likewise, the same module, program, and/or engine may be instantiated by different applications, services, code blocks, objects, routines, APIs, functions, etc. The terms "module," "program," and "engine" may encompass individual or groups of executable files, data files, libraries, drivers, scripts, database records, etc.

When included, display subsystem 308 may be used to present a visual representation of data held by non-volatile storage device 306. The visual representation may take the form of a graphical user interface (GUI). As the herein described methods and processes change the data held by the non-volatile storage device, and thus transform the state of the non-volatile storage device, the state of display subsystem 308 may likewise be transformed to visually represent changes in the underlying data. Display subsystem 308 may include one or more display devices utilizing virtually any type of technology. Such display devices may be combined with processing circuitry 302, volatile memory 304, and/or non-volatile storage device 306 in a shared enclosure, or such display devices may be peripheral display devices.

When included, input subsystem 310 may comprise or interface with one or more user-input devices such as a keyboard, mouse, touch screen, camera, or microphone.

When included, communication subsystem 312 may be configured to communicatively couple various computing devices described herein with each other, and with other devices. Communication subsystem 312 may include wired and/or wireless communication devices compatible with one or more different communication protocols. As non-limiting examples, the communication subsystem may be configured for communication via a wired or wireless local- or wide-area network, broadband cellular network, etc. In some embodiments, the communication subsystem may allow computing system 300 to send and/or receive messages to and/or from other devices via a network such as the Internet.

The following paragraphs provide additional description of aspects of the present disclosure. One aspect provides a computing system for generating avatars with semantic stylization. The computing system may comprise processing circuitry that executes instructions using portions of associated memory to implement a semantic stylization avatar rig. In an inference phase the processing circuitry may be configured to receive an instruction to generate a semantically stylized avatar. The instruction may include an input image of a user for which the semantically stylized avatar is to be generated. The processing circuitry may generate, via a parametric model, a user face mesh based on identity parameters of the input image of the user. The user face mesh may include curves that determine a face size and a face shape, and relative proportions and positions of facial features with respect to the determined face size and face shape. The processing circuitry may generate a neutral expression user face mesh by removing expression parameters and pose parameters from the user face mesh. The processing circuitry may input the input image, the identity parameters, and the neutral expression user face mesh to a semantic stylization avatar generation module to generate a semantically stylized avatar including semantically stylized features. The processing circuitry may output the semantically stylized avatar.

In this aspect, additionally or alternatively, the facial features in the user face mesh may include ears, eyes, eyelids, eyebrows, nose, and mouth.

In this aspect, additionally or alternatively, the semantically stylized features depicted in the semantically stylized avatar may include one or more of upturned nose, wide nose, thick lips, nasolabial folds, jowls, hooded eyes, under-eye lines, light skin, and dark skin.

In this aspect, additionally or alternatively, the semantic stylization avatar generation module may include a facial feature detector.

In this aspect, additionally or alternatively, the semantic stylization avatar generation module may include a wrinkle detector.

In this aspect, additionally or alternatively, the semantic stylization avatar generation module may include an image segmentation neural network, and a shape of hair of the user is extracted from the input image via segmentation.

In this aspect, additionally or alternatively, the semantic stylization avatar generation module may include an image segmentation neural network, and color features of each region of the input image are extracted from the input image and mapped to a stylized palette to approximate hair color and skin tone.

In this aspect, additionally or alternatively, the semantic stylization avatar generation module may include an image segmentation neural network, and one or more accessories is extracted from the input image.

In this aspect, additionally or alternatively, the input image may be a frontal face image.

Another aspect provides a method for generating semantically stylized avatars. In an inference phase, the method may comprise receiving an instruction to generate a semantically stylized avatar; generating, via a parametric model, a user face mesh based identity parameters of on the input image of the user; generating a neutral expression user face mesh by removing expression parameters and pose parameters from the user face mesh; inputting the input image, the identity parameters, and the neutral expression user face mesh to a semantic stylization avatar generation module to generate a semantically stylized avatar including semantically stylized features; and outputting the semantically stylized avatar. The instruction may include an input image of a user for which the semantically stylized avatar is to be generated. The user face mesh may include curves that determine a face size and a face shape, and relative proportions and positions of facial features with respect to the determined face size and face shape.

In this aspect, additionally or alternatively, the method may further comprise including ears, eyes, eyelids, eyebrows, nose, and mouth as facial features in the user face mesh.

In this aspect, additionally or alternatively, the method may further comprise including one or more of upturned nose, wide nose, thick lips, nasolabial folds, jowls, hooded eyes, under-eye lines, light skin, and dark skin as the semantically stylized features depicted in the semantically stylized avatar.

In this aspect, additionally or alternatively, the method may further comprise including a facial feature detector in the semantic stylization avatar generation module.

In this aspect, additionally or alternatively, the method may further comprise including a wrinkle detector in the semantic stylization avatar generation module.

In this aspect, additionally or alternatively, the method may further comprise including an image segmentation neural network in the semantic stylization avatar generation module, and extracting a shape of hair of the user from the input image via segmentation.

In this aspect, additionally or alternatively, the method may further comprise including an image segmentation neural network in the semantic stylization avatar generation module, extracting a mean color of each region of the input image from the input image, and mapping the mean color of each region to a stylized palette to approximate hair color and skin tone.

In this aspect, additionally or alternatively, the method may further comprise including an image segmentation neural network in the semantic stylization avatar generation module, and including an image segmentation neural network in the semantic stylization avatar generation module.

In this aspect, additionally or alternatively, the input image may be frontal face image.

Another aspect provides a computing system for generating avatars with semantic stylization. The computing system may comprise processing circuitry that executes instructions using portions of associated memory to implement a semantic stylization avatar rig. In an inference phase, the processing circuitry may be configured to receive an instruction to generate a two-dimensional semantically stylized avatar. The instruction may include an input image of a user for which the two-dimensional semantically stylized avatar is to be generated. The processing circuitry may generate, via a parametric model, a three-dimensional user face mesh based on identity parameters of the input image of the user. The three-dimensional user face mesh may include curves that determine a face size and a face shape, and relative proportions and positions of facial features with respect to the determined face size and face shape. The processing circuitry may generate a three-dimensional neutral expression user face mesh by removing expression parameters and pose parameters from the user face mesh. The processing circuitry may input the input image, the identity parameters, and the three-dimensional neutral expression user face mesh to a semantic stylization avatar generation module to a semantic stylization avatar generation module to generate the two-dimensional semantically stylized avatar including one or more of upturned nose, wide nose, thick lips, nasolabial folds, jowls, hooded eyes, under-eye lines, light skin, and dark skin as semantically stylized features. The processing circuitry may output the two-dimensional semantically stylized avatar.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A method (200) for generating semantically stylized avatars, the method (200) comprising, in an inference phase:
receiving an instruction (32) to generate a semantically stylized avatar (34), the instruction (32) including an input image (36) of a user for which the semantically stylized avatar (34) is to be generated;
generating, via a parametric model (38), a user face mesh (40) based on identity parameters (42) of the input image (36) of the user, the user face mesh (40) including curves that determine a face size and a face shape, and relative proportions and positions of facial features with respect to the determined face size and face shape;
generating a neutral expression user face mesh (48) by removing expression parameters and pose parameters from the user face mesh (40);
the input image (36), the identity parameters (42), and the neutral expression user face mesh (48) to a semantic stylization avatar generation module (50) to generate a semantically stylized avatar (34) including semantically stylized features (60); and
outputting the semantically stylized avatar (34).

2. The method according to claim 1, the method further comprising:
including ears, eyes, eyelids, eyebrows, nose, and mouth as facial features in the user face mesh.

3. The method according to claim 1 or claim 2, the method further comprising:
including one or more of upturned nose, wide nose, thick lips, nasolabial folds, jowls, hooded eyes, under-eye lines, light skin, and dark skin as the semantically stylized features depicted in the semantically stylized avatar.

4. The method according to any one of claims 1 to 3, the method further comprising:
including a facial feature detector in the semantic stylization avatar generation module.

5. The method according to any one of claims 1 to 4, the method further comprising:
including a wrinkle detector in the semantic stylization avatar generation module.

6. The method according to any one of claims 1 to 5, the method further comprising:
including an image segmentation neural network in the semantic stylization avatar generation module; and
extracting a shape of hair of the user from the input image via segmentation.

7. The method according to any one of claims 1 to 6, the method further comprising:
including an image segmentation neural network in the semantic stylization avatar generation module;
extracting a mean color of each region of the input image from the input image; and
mapping the mean color of each region to a stylized palette to approximate hair color and skin tone.

8. The method according to any one of claims 1 to 7, the method further comprising:
including an image segmentation neural network in the semantic stylization avatar generation module; and
extracting one or more accessories from the input image.

9. The method according to any one of claims 1 to 8, wherein
the input image is frontal face image.

10. The method of any one of claims 1 to 9, wherein:
semantically stylized features of hooded eyes, upturned nose, wide nose, thick lips, and jowls are determined by part-based principal component analysis decomposition of the face mesh.

11. A computing system (10) for generating avatars with semantic stylization, the computing system (10) comprising processing circuitry (18) that executes instructions using portions of associated memory (22) to implement a semantic stylization avatar rig (26), wherein, in an inference phase, the processing circuitry (18) is configured to:
receive an instruction (32) to generate a semantically stylized avatar (34), the instruction (32) including an input image (36) of a user for which the semantically stylized avatar (34) is to be generated;
generate, via a parametric model (38), a user face mesh (40) based on identity parameters (42) of the input image (36) of the user, the user face mesh (40) including curves that determine a face size and a face shape, and relative proportions and positions of facial features with respect to the determined face size and face shape;
generate a neutral expression user face mesh (48) by removing expression parameters and pose parameters from the user face mesh (40);
input the input image (36), the identity parameters (42), and the neutral expression user face mesh (48) to a semantic stylization avatar generation module (50) to generate a semantically stylized avatar (34) including semantically stylized features (60); and
output the semantically stylized avatar (34).

12. The computing system of claim 1, wherein
semantically stylized features of hooded eyes, upturned nose, wide nose, thick lips, and jowls are determined by part-based principal component analysis decomposition of the face mesh.

13. The computing system of claim 11 or 12, wherein the processing circuitry is further configured to carry out the steps of any of claims 2 to 9.

14. A computer program configured so as when run to carry out the method of any of claims 1 to 10.

15. A computing system (10) for generating avatars with semantic stylization, the computing system (10) comprising processing circuitry (18) that executes instructions using portions of associated memory (22) to implement a semantic stylization avatar rig (26), wherein, in an inference phase, the processing circuitry (18) is configured to:
receive an instruction (32) to generate a two-dimensional semantically stylized avatar (34), the instruction (32) including an input image (36) of a user for which the two-dimensional semantically stylized avatar (34) is to be generated;
generate, via a parametric model (38), a three-dimensional user face mesh (40) based on identity parameters (42) of the input image (36) of the user, the user face mesh (40) including curves that determine a face size and a face shape, and relative proportions and positions of facial features with respect to the determined face size and face shape;
generate a three-dimensional neutral expression user face mesh (48) by removing expression parameters and pose parameters from the user face mesh (40);
input the input image (36), the identity parameters (42), and the three-dimensional neutral expression user face mesh (48) to a semantic stylization avatar generation module (50) to generate the two-dimensional semantically stylized avatar (34) including one or more of upturned nose (60B) , wide nose (60C), thick lips (60D), nasolabial folds (60F), jowls (60G), hooded eyes (60A), under-eye lines (60E), light skin, and dark skin (60I) as semantically stylized features (60); and
output the two-dimensional semantically stylized avatar (34).
